# EUROPEAN PATENT APPLICATION

(11) **EP 4 600 390 A1**
(43) Date of publication of application: **13.08.2025**
(21) Application number: 23753783.2
(22) Date of filing: 17.05.2023
(51) Int. Cl.: C22B 15/00, C22B 3/22

(54) **METHOD FOR LEACHING COPPER BY USING PRESSURE LEACHING**

(30) Priority: 07.10.2022 KR 20220128929
(71) Applicant: Korea Zinc Co., Ltd., Seoul 06110 (KR)
(72) Inventor: CHOI, Heon Sik, Ulsan 44696 (KR); PARK, Sung Won, Ulju-gun Ulsan 45003 (KR)
(74) Representative: Angerhausen, Christoph
(86) International application number: PCT/KR2023/006684
(87) International publication number: WO 2023/243878

(57) **Abstract**

The present disclosure discloses a method for leaching copper using a pressure leaching technique, according to one embodiment, including: a raw material preparation step of preparing a raw material containing copper; and a pressure leaching step including a step of introducing the raw material into a leachate in a pressurization device and pressure-leaching copper while injecting oxygen into the pressurization device.

## Description

### TECHNICAL FIELD

The present disclosure relates to a method for leaching valuable metals, particularly copper, contained in a raw material using a pressure leaching technique. More specifically, the present disclosure relates to a method for recovering copper from a copper matte, a copper concentrate, a copper cement and a copper dust, which are raw materials of copper, using a pressure leaching technique and separating an iron component through precipitation.

### BACKGROUND

An atmospheric pressure leaching technique is popular as a general valuable metal leaching process. The atmospheric pressure leaching technique requires less equipment investment than other processes and has less risk for operation. Therefore, the atmospheric pressure leaching technique is popularly used in general hydrometallurgical processes. However, the atmospheric pressure leaching technique requires 16 to 24 hours of reaction time to increase the leaching efficiency in the case of copper. Costs increase due to the increase in the amount of gas fuel and steam according to the prolonged reaction time. The efficiency of productivity decreases due to the decrease in raw material processing capacity.

In addition, since the atmospheric pressure leaching technique is not a selective extraction technique, most of the impurity components other than a copper component are leached out. Therefore, there is a problem in that a process of removing impurities other than the copper component is additionally required as a subsequent process, and processing costs are incurred due to the additional processes.

### SUMMARY

An object of the present disclosure is to lower a reaction temperature, increase a copper leaching rate, reduce a reaction time, and improve the efficiency of operation by using a pressure leaching technique, which is a technique of applying a pressure as a leaching condition.

In addition, an object of the present disclosure is to increase the treatable amount of raw materials and increase the productivity by reducing the reaction time and improving the leaching efficiency.

In addition, an object of the present disclosure is to reduce the cost of a purification process required for iron removal and improve the productivity of operation by precipitating an iron (Fe) component according to the oxygen pressure, the reaction temperature, and the acidity in a final leachate during leaching.

According to one embodiment, there is provided a method for leaching copper using a pressure leaching technique, including: a raw material preparation step of preparing a raw material containing copper; and a pressure leaching step including a step of introducing the raw material into a leachate in a pressurization device and pressure-leaching copper while injecting oxygen into the pressurization device.

In one embodiment, the raw material is prepared from at least one of a copper concentrate, a copper matte, a copper cement, and a copper dust.

In one embodiment, the pressure leaching step further includes a step of precipitating an iron component of the raw material.

In one embodiment, the iron component of the raw material is precipitated in the form of at least one of jarosite and hematite.

In one embodiment, the pressurization device is an autoclave facility.

In one embodiment, the pressure leaching step is carried out in a temperature range of 140 degrees C to 150 degrees C.

In one embodiment, an acidity of the leachate after the reaction of the pressure leaching step is in a range of 60 g/L to 90 g/L.

In one embodiment, a solid density, which is a ratio of a mass of the raw material to a volume of the leachate introduced in the pressure leaching step, is in a range of 150 g/L to 200 g/L.

In one embodiment, a reaction time for pressure leaching in the pressure leaching step is in a range of 3 hours to 5 hours.

According to one embodiment, there is provided a method for leaching copper using a pressure leaching technique, including: a raw material preparation step of preparing a raw material containing copper and an iron component; and a pressure leaching step including a step of introducing the raw material into a leachate in a pressurization device and pressure-leaching copper while injecting oxygen into the pressurization device, wherein the pressure leaching step is performed in an autoclave facility, and includes a step of pressure-leaching copper of the raw material and a step of precipitating the iron component of the raw material.

According to various embodiments of the present disclosure, it is possible to lower a reaction temperature, increase a copper leaching rate, and reduce a reaction time by using a pressure leaching technique.

In addition, it is possible to increase the treatable amount of raw material and increase the productivity by reducing the reaction time and improving the leaching efficiency.

In addition, it is possible to reduce the cost of a purification process required for iron component removal and improve the productivity of operation by precipitating an iron component during leaching.

### BRIEF DESCRIPTION OF THE DRAWINGS

FIG. 1 is a flowchart illustrating a method for leaching copper using a pressure leaching technique according to an embodiment of the present disclosure.
FIG. 2 is a schematic cross-sectional view of an autoclave facility according to an embodiment of the present disclosure.

### DETAILED DESCRIPTION

Embodiments of the present disclosure are illustrated for describing the technical scope of the present disclosure. The scope of the claims according to the present disclosure is not limited to the embodiments described below or to the detailed descriptions of these embodiments.

Unlike the present disclosure, a generally popular leaching technique is an atmospheric pressure leaching technique. However, in the atmospheric pressure leaching technique, the reaction time lasts 16 to 24 hours to increase the copper (Cu) leaching rate. Therefore, additional costs may be incurred due to an increase in the amount of fuel and steam. Further, since the processed amount of a raw material is small, the productivity is low. In addition, in the process of leaching under an atmospheric pressure, an iron (Fe) component contained in the raw material is also leached out, and a subsequent purification process is additionally required.

The leaching method according to the present disclosure is a pressure leaching method in which an iron (Fe) component is precipitated. Therefore, it is possible to omit the subsequent process. Since the reaction temperature and the reaction time are reduced, it is possible to increase the copper (Cu) leaching rate and improve the productivity.

Hereinafter, the present disclosure will be described with reference to the drawings.

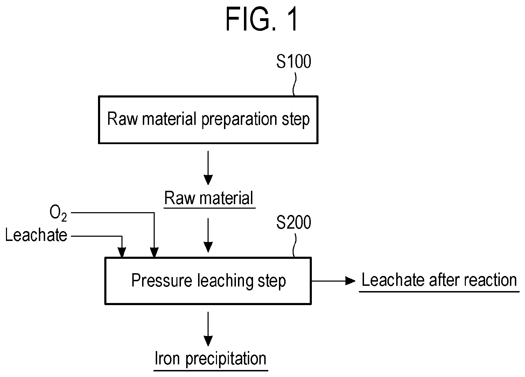

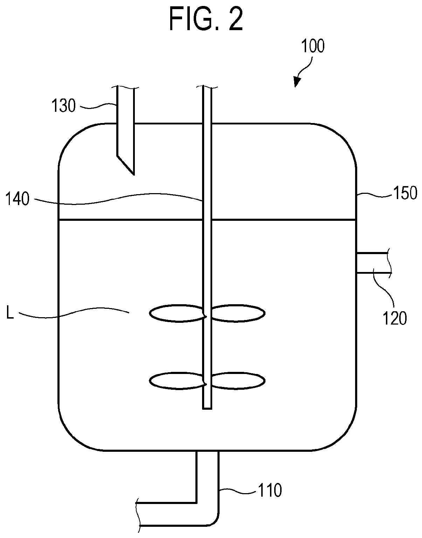

FIG. 1 is a flowchart illustrating a method for leaching copper using a pressure leaching technique according to an embodiment of the present disclosure. FIG. 2 is a schematic cross-sectional view of an autoclave facility 100 according to an embodiment of the present disclosure.

Referring to FIG. 1, a method for leaching copper using a pressure leaching technique using a pressure leaching technique according to an embodiment of the present disclosure may include a raw material preparation step S100 of preparing a raw material containing a valuable metal (e.g., copper), and a pressure leaching step S200 including a leaching step of pressure-leaching copper while introducing the raw material and injecting oxygen (e.g., oxygen gas) into a leachate in a pressurization device and a precipitation step of precipitating an iron component in the raw material.

### Raw Material Preparation Step S100

First, a raw material containing a valuable metal such as copper is prepared. The raw material may be at least one of a copper concentrate, a copper matte, a copper cement, and a copper dust. The raw material also contains an iron component.

### Pressure Leaching Step S200

The raw material is introduced into a pressurization device in which a leachate is placed in advance, and the valuable metal is pressure-leached into the leachate while oxygen is injected into the pressurization device. In one embodiment, the leachate to be introduced into the pressurization device may be a copper spent electrolyte containing 30 to 40 g/L of copper (Cu) and 160 to 170 g/L of sulfuric acid. Pressure-leaching is performed while injecting oxygen to the leachate. The reaction pressure in the pressurization device may be about 0.3 MPa to 1.5 MPa higher than the atmospheric pressure. Preferably, the reaction pressure in the pressurization device may be between about 0.5 MPa and 1.5 MPa.

If the pressure in the pressure leaching step S200 is less than 0.5 MPa, the saturated vapor pressure may decrease when the temperature drops, thereby reducing the dissolution rate of copper. In addition, when the temperature drops, the iron component in the solvent is precipitated as jarosite (Fe₃(SO₄)₂(OH)₆), the filterability may be significantly reduced and problems may occur during the process. If the pressure in the pressure leaching step S200 exceeds 1.5 MPa, the dissolution rate of copper may increase, but the pressure and temperature may be unnecessarily high. That is, the pressure may be an unnecessarily high pressure.

In the pressure leaching step S200, the iron component in the raw material is precipitated. The iron component in the raw material may precipitate in the form of at least one of jarosite and hematite.

In one embodiment, an autoclave facility may be used as the pressurization device. That is, the pressurization device may be an autoclave facility.

Referring to FIG. 2, the autoclave facility 100 may adjust the internal pressure and the internal temperature. In one embodiment, the autoclave facility 100 may include an inlet part 110, a discharge part 120, an oxygen injection part 130, an agitator 140, and a shell 150. A raw material may be introduced into the autoclave facility 100 through the inlet part 110. After the reaction is completed, the leachate after reaction may be discharged to the outside of the autoclave facility 100 through the discharge part 120. Oxygen may be injected into the autoclave facility 100 through the oxygen injection part 130. The agitator 140 may mix the leachate (L). The shell 150 may determine the shape of the autoclave facility 100.

Oxygen is injected into the autoclave facility 100, and a valuable metal may be pressure-leached into the leachate. For example, a raw material containing a copper component may be leached in an acidic atmosphere. In the acidic atmosphere, oxygen may be used as an oxidizing agent. The reaction formula for leaching a valuable metal in the raw material may be represented Reaction Formula 1 below.

[Reaction Formula 1] 2H⁺+MeS+1/2O₂ → Me²⁺+S+H₂O

where Me is a valuable metal such as copper.

When oxygen is injected, most valuable metals such as copper can be leached in an acidic atmosphere. In one embodiment, the raw material further contains an iron (Fe) component. The iron component may have a low precipitation rate, and the iron component of the raw material is precipitated. For example, Fe²⁺ leached according to the following Reaction Formula 2 may be oxidized to Fe³⁺ again by an oxidizing agent.

[Reaction Formula 2] 2Fe²⁺+2H⁺+1/2O₂ → 2Fe³⁺+H₂O

The iron component in the raw material may be precipitated in the form of at least one of jarosite and hematite according to Reaction Formula 3 and Reaction Formula 4.

[Reaction Formula 3] Me₂SO₄+3Fe₂(SO₄)₃+12H₂O → 2MeFe₄(SO₄)₂(OH)₆+6H₂SO₄

[Reaction Formula 4] 2Fe³⁺+3H₂O → Fe₂O₃+6H⁺

In one embodiment, in the step of pressure-leaching the valuable metal such as copper into the leachate and in the step of precipitating the iron component in the raw material, the temperature inside the autoclave facility 100 may be 140 degrees C to 150 degrees C. If the temperature inside the autoclave facility 100 is less than 140 degrees C and the pH is 0, the precipitate of the iron component of the raw material is not formed. Therefore, it may not be suitable for an iron precipitation process. If the temperature inside the autoclave facility 100 exceeds 150 degrees C, the amount of steam and gas fuel used in the autoclave facility 100 may increase, thereby increasing the operating costs. Preferably, the temperature inside the autoclave facility 100 may be 140 degrees C to 150 degrees C. More preferably, the temperature inside the autoclave facility 100 may be 145 degrees C to 150 degrees C.

In one embodiment, the solid density of the raw material introduced into the pressurization device may be in a range of 150 g/L to 200 g/L. As used herein, the term "solid density" is defined as the ratio of the mass of the raw material introduced into the pressurization device to the volume of the leachate previously introduced into the pressurization device. In other words, the solid density may be the ratio of the mass of the raw material introduced per unit solvent, and may be the mass of the raw material per 1 L of solvent. The lower the solid density, the higher the leaching efficiency, but the lower the solid density, the lower the throughput of the raw material, which may cause a decrease in productivity. Further, the lower the solid density, the lower the concentration of the leached copper component. In addition, if the solid density is 150 g/L to 200 g/L, a difference in copper leaching rate may not be large during 3-hour reaction. Preferably, for the purpose of increasing productivity, the raw material may have a solid density of 180 g/L to 200 g/L.

In one embodiment, after the valuable metal is pressure-leached into the leachate L, the acidity of the leachate after reaction may be in a range of 60 g/L to 90 g/L. If the acidity of the leachate after reaction is less than 60g/L, the copper leaching rate may be reduced to 90% or less, and if the acidity of the leachate after reaction exceeds 90g/L, the iron component in the raw material may be leached without being precipitated. Therefore, this may not be suitable for an iron component separation process. Thus, considering the copper leaching rate and the purification process through precipitation of the iron component in the raw material, the acidity of the leachate after the reaction may be adjusted to 80 g/L to 90 g/L.

In one embodiment, the reaction time for pressure-leaching the valuable metal may be in a range of 3 hours to 5 hours. As the reaction time increases, the iron component precipitation rate and the copper leaching rate may increase. However, the copper leaching rate may not be high even if the reaction time is increased. Therefore, preferably, the reaction time for pressure-leaching the valuable metal may be 3 to 4 hours.

That is, the step of leaching the valuable metal into the leachate and the step of precipitating the iron component in the raw material may be performed in the autoclave facility 100 that controls the internal temperature and the internal pressure. Accordingly, according to the present disclosure, an impurity purification process due to precipitation of an iron component may be reduced while leaching the valuable metal from the raw material. In this case, it is possible to reduce the equipment for a copper smelting process, facilitate the management of operation, and reduce the operating costs.

### Examples

A copper matte containing 31 to 33wt% of copper (Cu), 1.4 to 3wt% of iron (Fe), 38 to 40wt% of lead (Pb), and 0.6 to 2wt% of zinc (Zn) was used as a raw material. In a step of leaching the valuable metal into a leachate, an autoclave facility was used. The temperature inside the autoclave facility was set to 150 degrees C. As the leachate, a copper spent electrolyte containing 30 to 40 g/L of copper (Cu) and 160 to 170 g/L of sulfuric acid was used.

### Examples 1 to 3

The reaction was carried out for 3 hours at a solid density (the ratio of the mass of the raw material introduced into the pressurization device to the volume of the leachate previously introduced into the pressurization device) of 150 g/L by adjusting the introduced raw material.

In Examples 1 to 3, the concentration of sulfuric acid in the leachate after the reaction was adjusted to compare the precipitation rate of the iron component and the recovery rate of copper. In Example 1, the concentration of sulfuric acid in the leachate after the reaction was adjusted to 60 g/L. In Example 2, the concentration of sulfuric acid in the leachate after the reaction was adjusted to 90 g/L. In Example 3, the concentration of sulfuric acid in the leachate after the reaction was adjusted to 130 g/L.

### Examples 4 to 6

The introduction conditions were set to 185 g/L or 200 g/L of solid density by adjusting the introduced raw material. In addition, the reaction time was adjusted to 3 hours and 5 hours. That is, in Example 4, the solid density was adjusted to 185 g/L, the concentration of sulfuric acid in the leachate after reaction was adjusted to 90 g/L, and the reaction time was adjusted to 3 hours. In Example 5, the solid density was adjusted to 200 g/L, the concentration of sulfuric acid in the leachate after reaction was adjusted to 90 g/L, and the reaction time was adjusted to 3 hours. In Example 6, the solid density was adjusted to 200 g/L, the concentration of sulfuric acid in the leachate after reaction was adjusted to 90 g/L, and the reaction time was adjusted to 5 hours.

Other experimental conditions are the same as the basic conditions of the Examples.

### Comparative Examples 1 to 3

Leaching was carried out under atmospheric pressure conditions, and the reaction temperature was set at 90 degrees C to 95 degrees C. The same copper matte and leachate as in Example 1 were used. In Comparative Examples 1 to 3, the concentration of sulfuric acid in the leachate after reaction was adjusted to 140 g/L, 160 g/L, and 180 g/L, respectively. The raw material was introduced at a solid density of 150 g/L, and the reaction time was maintained for 24 hours.

The results obtained as above are shown in Table 1 below.

**[Table 1]**

| | Solid density (g/L) | Concentration of sulfuric acid in leachate after reaction (g/L) | Reaction time (hr) | Iron component precipitation rate in leachate after reaction (%) | Copper recovery rate (%) |
|---|---|---|---|---|---|
| Ex. 1 | 150 | 60 | 3.0 | 3.5 | 91.2 |
| Ex. 2 | 150 | 90 | 3.0 | 1.9 | 98.6 |
| Ex. 3 | 150 | 130 | 3.0 | -4.0 | 97.3 |
| Ex. 4 | 185 | 90 | 3.0 | 3.0 | 97.5 |
| Ex. 5 | 200 | 90 | 3.0 | 1.0 | 96.9 |
| Ex. 6 | 200 | 90 | 5.0 | 14.2 | 97.4 |
| Comparative Ex. 1 | 150 | 140 | 24.0 | -28.6 | 97.5 |
| Comparative Ex. 2 | 150 | 160 | 24.0 | -35.9 | 98.2 |
| Comparative Ex. 3 | 150 | 180 | 24.0 | -41.2 | 98.9 |

Comparison of Examples 1 to 3 indicates that the copper recovery rate is low when the concentration of sulfuric acid in the leachate after reaction was adjusted to 60 g/L.

When the solid density was adjusted to 185 g/L or 200 g/L by adjusting the introduction amount of raw material in Examples 4 to 6, there was no significant difference from Examples 1 to 3 in which the precipitation rate of the iron component and the recovery rate of copper were tested under the low solid density conditions. Therefore, the productivity of the operation can be increased by increasing the raw material processing amount to 200 g / L, which is a condition of a large introduction amount of raw material.

In addition, when the reaction time is increased to 5.0 hours, the precipitation rate of the iron component and the recovery rate of copper were improved. However, the goal is to increase the productivity of operation. The productivity during operation can be increased by adjusting the solid density to 200 g/L, adjusting the sulfuric acid concentration in the leachate after the reaction to 90 g/L, and adjusting the reaction time to 3.0 hours.

In Comparative Examples 1 to 3, the reaction must be continued for 24 hours or more in order to reach the same recovery rate of copper as in Examples 1 to 6. Further, since the iron in the raw material begins to be leached out rather than the precipitation of the iron component in the leachate, it is not suitable for an impurity separation process. Therefore, as compared with the atmospheric pressure leaching, the pressure leaching method may be suitable because the cost is reduced due to the separation of the iron component and the reduction of the reaction time. In addition, as the goal is to increase the productivity of operation, it is possible to increase the productivity during operation by using the conditions of Example 5.

Although the technical scope of the present disclosure has been described by examples shown in some embodiments and the accompanying drawings, it should be appreciated that various substitutions, modifications and alterations can be made without departing from the technical scope of the present disclosure that can be understood by those skilled in the art. Moreover, such substitutions, modifications and alterations should be construed to fall within the scope of the appended claims.

## Claims

1. A method for leaching copper using a pressure leaching technique, comprising:
a raw material preparation step of preparing a raw material containing copper; and
a pressure leaching step including a step of introducing the raw material into a leachate in a pressurization device and pressure-leaching copper while injecting oxygen into the pressurization device.

2. The method of claim 1, wherein the raw material is prepared from at least one of a copper concentrate, a copper matte, a copper cement and a copper dust.

3. The method of claim 1 or 2, wherein the pressure leaching step further includes a step of precipitating an iron component of the raw material.

4. The method of claim 3, wherein the iron component of the raw material is precipitated in the form of at least one of jarosite and hematite.

5. The method of claim 1 or 2, wherein the pressurization device is an autoclave facility.

6. The method of claim 1 or 2, wherein the pressure leaching step is carried out in a temperature range of 140 degrees C to 150 degrees C.

7. The method of claim 1 or 2, wherein an acidity of the leachate after the reaction of the pressure leaching step is in a range of 60 g/L to 90 g/L.

8. The method of claim 1 or 2, wherein a solid density, which is a ratio of a mass of the raw material to a volume of the leachate introduced in the pressure leaching step, is in a range of 150 g/L to 200 g/L.

9. The method of claim 1 or 2, wherein a reaction time for pressure leaching in the pressure leaching step is in a range of 3 hours to 5 hours.

10. A method for leaching copper using a pressure leaching technique, comprising:
a raw material preparation step of preparing a raw material containing copper and an iron component; and
a pressure leaching step including a step of introducing the raw material into a leachate in a pressurization device and pressure-leaching copper while injecting oxygen into the pressurization device,
wherein the pressure leaching step is performed in an autoclave facility, and includes a step of pressure-leaching copper of the raw material and a step of precipitating the iron component of the raw material.
